# EUROPEAN PATENT SPECIFICATION

(11) **EP 0 386 917 B1**
(45) Date of publication and mention of the grant of the patent: **07.06.1995**
(21) Application number: 90302033.7
(22) Date of filing: 26.02.1990
(51) Int. Cl.: H04B 1/20, H04H 1/04

(54) **Signal distribution systems**
System für Signalverteilung
Systèmes pour la distribution de signaux

(30) Priority: 07.03.1989 GB 8905176
(43) Date of publication of application: 12.09.1990
(73) Proprietor: THORN EMI plc, London W1A 2AY (GB)
(72) Inventor: Barnes, Peter, Wiltshire, SN2 6NW (GB); James, Timothy Andrew, Harrow, Middlesex HAi 4TJ (GB); Harvey, Arthur Soutar, Uxbridge, Middlesex, UB8 2JW (GB)
(74) Representative: Hurst, Richard Arthur Alexander

(56) References cited:
- EP-A- 0 325 331
- GB-A- 2 173 077
- RADIO ENGINEERING vol. 12, no. 44, 1 July 1957, pages 42 - 51; KUZNEZOV:'Collective Television Reception on twelve Channels'
- WESCON TECHNICAL PAPERS vol. 16, 22 September 1972, LOS ANGELES,CA pages 1 - 6;NAMEKAWA ET AL: 'Two-way Information Distribution System for Local Community'

## Description

This invention relates to signal distribution systems. In particular the invention relates to signal distribution systems for the interchange of signals between a number of electrical appliances. Such systems are used, for example to distribute video signals and find use in a number of situations, for example in domestic environments for providing a link between a television and a video recorder, or in security systems for providing a link between a surveillance camera and a monitor system. These systems generally suffer the disadvantage that the locations of the video signal generator and receiver are fixed. For example in a domestic environment, the output of a video recorder can often only be viewed on one television whose location in the house is normally determined by such factors as the availability of an aerial point.

In U.K. Patent Application GB 2166328 there is described an inhouse signal distribution system for the distribution of signals from a head station to a number of electrical appliances distributed round a premises. Such a system does not enable, however, the interchange of signals between the appliances connected to the system. Furthermore the system described in GB 2166328 requires the use of an active signal splitter, which makes the system rather expensive.

In U.K. Patent Application GB 2168226 there is described a hybrid cabled TV distribution system for the distribution of video signals between a number of television receivers. Again this system does not enable the interchange of signals between the appliances connected to the system, as it is only designed for the distribution of signals from a central source.

EP-A-0 325 331, published on the 26.07.89 and thus falling under Article 54(3) EPC, discloses a signal distribution network system having no symmetrical signal splitter.

It is an object of the present invention to provide a signal distribution system which enables the interchange of signals between the appliances connected to the system.

According to the present invention a signal distribution system for the interchange of signals between a plurality of appliances comprises: a passive symmetrical signal splitter; cabling for connecting respective ports of the splitter to a distribution of remote signal sockets; and control means for allocating frequency channels to a plurality of appliances which in use of the system are connected to respective ones of the sockets, the system being such that signals within a particular frequency channel injected into the system by one of the appliances may be received by any receiver appliance connected to the system to which has been allocated the same frequency channel.

One signal distribution system in accordance with the invention will now be described, by way of example only, with reference to the accompanying figures in which:
Figure 1 is a schematic view of the system; and
Figure 2 shows in more detail one segment of the central splitter of Figure 1.

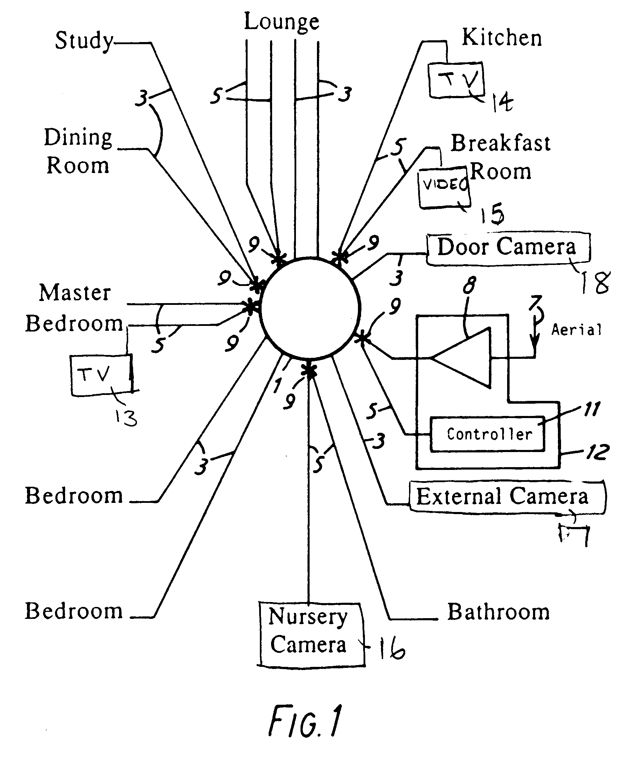

Referring firstly to Figure 1, the system to be described is designed for use in a domestic environment, and comprises a video distribution network. The network includes a passive, symmetrical star splitter 1 having twelve limbs connected to various wall mounted outlets within the house via coaxial cables, 3, 5 one of the outlets being connected to an aerial 7 for the house via an amplifier 8. Some of the cables 3 consist of single, typically 20 metre lengths of cable connected directly to the splitter 1, whilst others of the cables 5 consist of 10 metre lengths of cables connected via secondary splitters 9, this choice of cable lengths adequately covering a typical semi-detached property. It will be appreciated however that for any particular star splitter the actual cable configuration is readily variable.

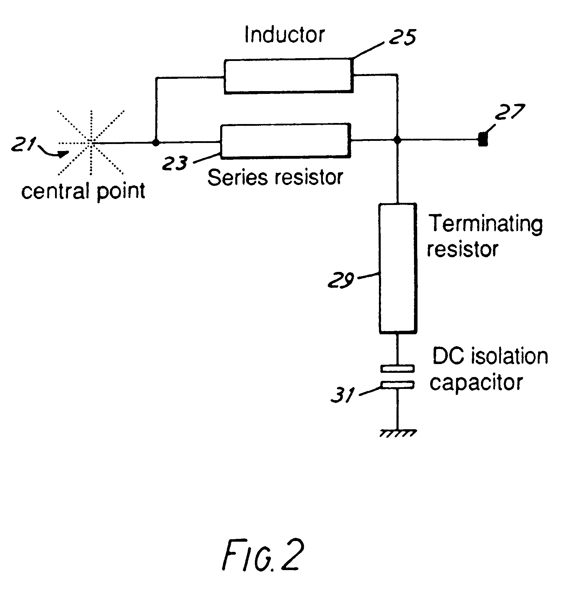

Referring now also to Figure 2, each limb of the splitter 1 comprises a parallel arrangement of an isolating resistor 23 and bypass inductor 25 connected between the central point 21 of the splitter 1, and a port 27 which is connected to one of the cables 3, or alternatively to one of the secondary splitters 9 which is in turn connected to two of the cables 5. The port 27 is also connected via a series arrangement of a terminating resistor 29 and a DC isolation capacitor 31 to earth. The impedances at each port 27 are matched for each limb of the splitter 1 so as to avoid reflections which may affect the video signal quality, the splitter 1 being designed so as to be insensitive to the number of outlets connected to the ports 27 whether they are being used, terminated or left open circuit.

In use of the system various video appliances are connected to the outlets within the house, these either being capable of receiving video signals in the case of television receivers 13, 14, or video recorders 15 in a recording mode, or injecting video signals into the network in the case of video recorders 15 in a playback mode, surveillance cameras 16, 17, 18, or the aerial 7. A central controller 11 monitors the allocation of frequency channels within the system, the controller 11 being conveniently supplied to the householder within a unit 12 also containing the aerial amplifier 8. when an appliance requires a channel, a signal is sent to the controller 11 requesting a free frequency channel, the controller responding with the channel which the appliance can use. The controller 11 will subsequently release the channel for use with a different service when the appliance is no longer using the channel. Communication between the controller 11 and appliances takes place via the cables 3, 5 using a signalling channel at a frequency below that of the TV spectrum, i.e. typically within the frequency spectrum between DC to about 1MHz, the bypass inductor 25 being effective to bypass the control channel signals in normal use of the system. When a video signal is inserted into the network, using an allocated channel, it will be available at all outlets on the same frequency channel, there being no frequency translation in the system. Thus, for example, the output of an external camera can be viewed in either a bedroom or the lounge as is required whilst being simultaneously recorded on a video recorder using one channel whilst the output of, for example, a different video recorder in the lounge may be viewed on a television in the breakfast room using an alternative channel. The system may also be arranged to be responsive to outside stimuli, for example the ringing of a door bell causing the output of a door camera to be displayed on a television screen or to be recorded on a video recorder. Furthermore the system may be arranged such that the status of the various appliances is displayed on a television screen, or alternatively on a separate display (not shown) such as a liquid crystal display located at a suitable location.

It will be seen that each appliance must only use a channel which has been allocated to it. The video cameras will be connected to the system using respective modulators which may be set to a specific frequency channel. This channel may be set by the central controller 11 or alternatively set to a specific channel when it is installed. In the case of modern video recorders, whilst the modulator within the recorder together with a separate amplifier may be used to set the level of the signals injected into the system, this is only the case where there is a single video recorder connected to the system. Generally it will be preferable to connect each video recorder through a separate modulator which may be set to a particular channel, so as to enable tighter control of the signal levels in the relevant channel and ensuring the quality of the services made available by the system. The attenuation of any signal transmitted across the system will be the same, thus ensuring that the signal level at all outlets is the same, and the greater than the minimum level required to work with a television.

With regard to television sets, modern sets have synthesised tuners, and it will therefore be a simple modification to enable such a set to be switched to a specific channel by commands over the video system.

It has been found that using a star splitter 1 having a port to port loss of 22dB, and cables 3, 5 of 5mm diameter, the system gives adequate performance in the frequency range DC to 860 MHz. As the splitter 1 will pass DC power, appliances may be powered from the system. The number of frequency channels which can be used will be limited by the relevant broadcast standards, e.g. PAL, SECAM, NTSC, MAC etc. In the United Kingdom, where the television signals are PAL encoded, using carrier frequencies in the UHF frequency range, 460-860 MHz, over 40 television channels should be available, although due to interference of the harmonics introduced during frequency conversion process within the video signal receivers certain of these channels cannot be used. In practice there will be at least 12 Channels available. Lower frequency channels can of course be used for non video applications using suitable modulation methods.

It will be appreciated that whilst the particular system described herebefore includes a central star splitter having twelve limbs, of which six are connected to secondary splitters, video signal distribution systems in accordance with the invention will be configured in view of the number and distribution of video sockets which it is required to connect, and the signal attenuation which can be tolerated.

It will also be appreciated that whilst the video signal distribution system described herebefore is designed for a domestic environment, systems in accordance with the invention find further applications, for example in surveillance systems for an industrial premises.

It will also be appreciated that whilst the signal distribution system described herebefore by way of example is a video signal distribution system, signal distribution systems in accordance with the invention also find application in the distribution of other signals, for example audio signals, digital data signals and monitoring signals.

## Claims

1. A signal distribution system for the interchange of signals between a plurality of appliances comprising: a passive symmetrical signal splitter (1); cabling (3,5) for connecting respective ports of the splitter to a distribution of remote signal sockets; and control means (11) for allocating frequency channels to a plurality of appliances which in use of the system are connected to respective ones of the sockets, the system being such that signals within a particular frequency channel injected into the system by one of the appliances may be received by any receiver appliance connected to the system to which has been allocated the same frequency channel.

2. A signal distribution system according to Claim 1 in which the signals are video signals.

3. A signal distribution system according to either one of the preceding claims in which the symmetrical splitter (1) is a star splitter.

4. A signal distribution system according to Claim 3 in which one or more of the ports of the star splitter (1) are connected to respective secondary passive splitters (9) whose ports are connected to respective ones of the sockets.

5. A signal distribution system according to any one of the preceding claims for use in a domestic environment.

6. A signal distribution system according to any one of Claims 1 to 4 for use in a security system.

7. A signal distributing system according to any one of the claims 2 to 6 in which the control means (11) and appliances communicate via signals at a frequency below that of the video signals.

8. A signal distribution system according to Claim 7 in which each appliance is connected to the splitter via an isolating resistive means (23), an inductive means (25) being connected in parallel with the resistive means (23) so as to bypass the lower frequency signals.

## Patentansprüche

1. Signalverteilungssystem zum Austausch von Signalen zwischen einer Vielzahl von Geräten, umfassend: einen passiven symmetrischen Signalverteiler (1); Verkabelungsmittel (3, 5) zur Verbindung entsprechender Anschlüsse des Signalverteilers mit einer Verteilung von entfernten Signalbuchsen; und Steuermitteln (11) zur Zuordnung von Frequenzkanälen zu einer Vielzahl von Geräten, die im Betrieb des Systems mit entsprechenden Buchsen verbunden sind, wobei das System so ist, daß Signale innerhalb eines bestimmten Frequenzkanals, die in das System durch eines der Geräte injiziert werden, durch jede mit dem System verbundene Empfangseinrichtung empfangen werden können, der derselbe Frequenzkanal zugeordnet worden ist.

2. Signalverteilungssystem nach Anspruch 1, bei dem die Signale Videosignale sind.

3. Signalverteilungssystem nach einem der vorhergehenden Ansprüche, bei dem der symmetrische Verteiler (1) ein Sternverteiler ist.

4. Signalverteilungssystem nach Anspruch 3, bei dem ein oder mehrere Anschlüsse des Sternverteilers (1) mit entsprechenden sekundären passiven Verteilern (9) verbunden sind, deren Anschlüsse mit entsprechenden Buchsen verbunden sind.

5. Signalverteilungssystem nach einem der vorhergehenden Ansprüche für die Verwendung in häuslicher Umgebung.

6. Signalverteilungssystem nach einem der Ansprüche 1 bis 4 für die Verwendung in einem Sicherheitssystem.

7. Signalverteilungssystem nach einem der Ansprüche 2 bis 6, bei dem die Steuermittel (11) und die Geräte miteinander über Signale in Verbindung stehen, deren Frequenz unter der Frequenz der Videosignale liegt.

8. Signalverteilungssystem nach Anspruch 7, bei dem jedes Gerät mit dem Verteiler üDer ein isolierendes Widerstandsmittel (23) verbunden ist, wobei ein induktives Mittel (25) parallel zu dem Widerstandsmittel (23) geschaltet ist, um einen Bypass für die niederfrequenten Signale zu bilden.

## Revendications

1. Système de distribution de signaux pour l'échange de signaux entre une pluralité d'installations, comprenant : un séparateur de signal symétrique passif (1) ; un câblage (3, 5) pour connecter des ports respectifs du séparateur à une distribution par douilles de signaux à distance ; et un moyen de commande (11) pour allouer des canaux de fréquence à une pluralité d'installations qui, lors de l'utilisation du système, sont connectées à certaines respectives des douilles, le système étant tel que des signaux dans un canal de fréquence particulier injectés dans le système par l'une des installations puissent être reçus par une quelconque installation de récepteur connectée au système auquel a été alloué le même canal de fréquence.

2. Système de distribution de signaux selon la revendication 1, dans lequel les signaux sont des signaux vidéo.

3. Système de distribution de signaux selon l'une quelconque des revendications précédentes, dans lequel le séparateur symétrique (1) est un séparateur en étoile.

4. Système de distribution de signaux selon la revendication 3, dans lequel un ou plusieurs des ports du séparateur en étoile (1) sont connectés à des séparateurs passifs secondaires respectifs (9) dont des ports sont connectés à certaines respectives des douilles.

5. Système de distribution de signaux selon l'une quelconque des revendications précédentes destiné à être utilisé dans un environnement domestique.

6. Système de distribution de signaux selon l'une quelconque des revendications 1 à 4 destiné à être utilisé dans un système de sécurité.

7. Système de distribution de signaux selon l'une quelconque des revendications 2 à 6, dans lequel le moyen de commande (11) et les installations communiquent via des signaux à une fréquence inférieure à celle des signaux vidéo.

8. Système de distribution de signaux selon la revendication 7, dans lequel chaque installation est connectée au séparateur via un moyen résistif isolant (23), un moyen inductif (25) étant connecté en parallèle au moyen résistif (23) de manière à dériver les signaux de fréquences inférieures.
